# EUROPÄISCHE PATENTSCHRIFT

(11) **EP 2 975 685 B1**
(45) Veröffentlichungstag und Bekanntmachung des Hinweises auf die Patenterteilung: **14.03.2018**
(21) Anmeldenummer: 15171186.8
(22) Anmeldetag: 09.06.2015
(51) Int. Cl.: H01M 10/42, H01M 10/48

(54) **ÜBERWACHUNG EINES ELEKTRISCHEN ENERGIESPEICHERS**
MONITORING OF AN ELECTRICAL ENERGY STORAGE DEVICE
SURVEILLANCE D'UN ACCUMULATEUR D'ENERGIE ELECTRIQUE

(30) Priorität: 17.07.2014 DE 102014213926
(43) Veröffentlichungstag der Anmeldung: 20.01.2016
(73) Patentinhaber: ROBERT BOSCH GMBH, 70442 Stuttgart (DE)
(72) Erfinder: Ellam, Mark, Stowmarket, Suffolk, IP14 1TX (GB); Koepf, Christian, Wherstead, IP9 2BA (GB); Segret, Mickael, 70569 Stuttgart (DE)

(56) Entgegenhaltungen:
- US-A1- 2003 054 229
- US-A1- 2012 112 700
- Sven Kaulfuss: "MacBook: Ladezyklen auslesen und Kapazität des Akku bestimmen - GIGA", , 27. Februar 2013 (2013-02-27), XP055227423, Gefunden im Internet: URL:http://www.giga.de/laptops/macbook/tip ps/macbook-ladezyklen-auslesen-und-kapazit at-des-akku-bestimmen/ [gefunden am 2015-11-10]

## Beschreibung

Die Erfindung betrifft einen elektrischen Energiespeicher. Insbesondere betrifft die Erfindung einen elektrischen Energiespeicher, der in wechselndem Einsatz an unterschiedlichen Vorrichtungen, insbesondere Handwerkzeugen, betrieben werden kann.

### Stand der Technik

Ein Akkupack umfasst einen elektrischen Energiespeicher und eine Verarbeitungseinrichtung. Das Akkupack ist bevorzugterweise so aufgebaut, dass es mit einem Elektrowerkzeug verbunden oder von ihm getrennt werden kann, ohne dafür ein Werkzeug zu erfordern. Beispielsweise können zwei Akkupacks im Wechsel an einem Akkuschrauber betrieben werden. Das jeweils nicht mit dem Akkuschrauber verbundene Akkupack kann dann mittels eines Ladegeräts aufgeladen werden. Es ist auch ein wechselnder Betrieb des Akkupacks an unterschiedlichen Elektrowerkzeugen möglich, beispielsweise einer Taschenlampe, einer Heckenschere, einem Rasenkantenschneider oder einem anderen Gerät.

Die Verarbeitungseinrichtung ist üblicherweise dazu eingerichtet, einen Ladezustand des Energiespeichers zu überwachen und auf einer Anzeigeeinrichtung auszugeben. Ein Benutzer des Akkupacks kann so selbst entscheiden, wann das Akkupack aufgeladen und wann es verwendet werden soll.

Die Leistungsfähigkeit des elektrischen Energiespeichers ist davon abhängig, in welcher Weise der Energiespeicher zuvor elektrisch belastet wurde. Die Belastung kann den Energiespeicher altern lassen, sodass er einen Teil seiner ursprünglich vorhandenen Kapazität einbüßt.

DE 10 2008 058 924 A1 betrifft ein Verfahren zur Identifikation und Qualitätsdokumentation eines Akkumulators, der für ein Industriewerkzeug einsetzbar ist.

US2012/112700 A1 offenbart ein Batteriesystem mit einem Batteriepack, welches befähigt ist die Anzahl der Ladezyklen zu bestimmen, und einem Schaltungsteil, welches die Zahl der Ladezyklen auf einem Anzeigegerät darstellt. Das Schaltungsteil weist zudem einen Verbraucherkreis, sowie einen Ladekreis für den Batteriepack auf. Der Erfindung liegt die Aufgabe zugrunde, eine verbesserte Technik zur Überwachung des Zustands eines elektrischen Energiespeichers bereitzustellen. Die Erfindung löst diese Aufgabe mittels eines Verfahrens, eines Computerprogrammprodukts, eines Akkupacks und eines Systems mit den Merkmalen der unabhängigen Ansprüche. Unteransprüche geben bevorzugte Ausführungsformen wieder.

### Offenbarung der Erfindung

Ein Verfahren zur Überwachung eines Zustands eines elektrischen Energiespeichers eines Akkupacks umfasst Schritte des Bestimmens einer Anzahl Ladezyklen, denen der Energiespeicher ausgesetzt war, wobei die bestimmte Anzahl der Ladezyklen inkrementiert wird, wenn eine zusammenhängende Aufladung des Energiespeichers zu einem vorbestimmten Aufladeziel erfasst wird, und des Bereitstellens der Anzahl an einen Benutzer des Energiespeichers mittels einer Einrichtung des Akkupacks, welche eine optische oder akustische Ausgabeeinrichtung umfasst. Durch das Protokollieren der Anzahl Ladezyklen kann ein Wert bereitgestellt werden, der charakteristisch für eine Leistungsfähigkeit bzw. Alterung des elektrischen Energiespeichers ist. Ein Benutzer kann so eine gute Grundlage für eine Entscheidung, wie mit dem Akkupack weiter zu verfahren ist, erhalten. Durch das Zählen von Ladezyklen nur dann, wenn sie eine zusammenhängende Aufladung des Energiespeichers bewirken, können Fehler bei der Bestimmung der Anzahl Ladezyklen, beispielsweise durch nur kurzfristiges Verbinden des Akkupacks mit einem Ladegerät, vermieden werden. Die bereitgestellte Anzahl Ladezyklen des Energiespeichers kann so zutreffender sein bzw. eine zuverlässigere Beurteilung einer Alterung des Energiespeichers erlauben.
In einer Variante umfasst das Aufladeziel eine vorbestimmte Aufladezeit. Die Aufladezeit kann beispielsweise auf der Basis eines Ladestroms und einer Maximalkapazität des Energiespeichers bestimmt werden. Die Maximalkapazität und der Ladestrom sind üblicherweise vorbestimmt, sodass die Aufladezeit ebenfalls fest vorgegeben sein kann. Ein Ladevorgang, der als Ladezyklus gezählt wird, kann so einfach und zutreffend bestimmt werden.

In einer weiteren Ausführungsform wird die Aufladezeit auf der Basis eines Ladezustands des Energiespeichers bestimmt. Beispielsweise kann eine lange Ladezeit erforderlich sein, um einen stark erschöpften Energiespeicher aufzuladen, während eine im Vergleich kürzere Ladezeit für einen weniger stark erschöpften Energiespeicher ausreichend sein kann.

In einer weiteren Ausführungsform betrifft das Aufladeziel die Erhöhung eines Ladezustands um einen vorbestimmten Teil der Gesamtkapazität des Energiespeichers. Beispielsweise kann das Aufladeziel erreicht werden, wenn der Energiespeicher um 10% seiner nominellen Kapazität aufgeladen wird. Dadurch kann ein relatives Maß verwendet werden, das besonders gut auf die Alterungsprozesse im Inneren eines üblichen Energiespeichers abgestimmt ist.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Die Verarbeitungseinrichtung kann insbesondere einen programmierbaren Mikrocomputer umfassen.

Ein Akkupack umfasst einen elektrischen Energiespeicher, eine Verarbeitungseinrichtung zur Bestimmung einer Anzahl Ladezyklen, denen der Energiespeicher ausgesetzt war, wobei die Verarbeitungseinrichtung dazu eingerichtet ist, die bestimmte Anzahl der Ladezyklen zu inkrementieren, wenn eine zusammenhängende Aufladung des Energiespeichers zu einem vorbestimmten Aufladeziel erfasst wird, und eine Einrichtung zur Bereitstellung der Anzahl Ladezyklen an einen Benutzer des Energiespeichers.

Ein derartiges Akkupack kann stets bezüglich seiner elektrischen Leistungsfähigkeit auf der Basis der Anzahl seiner bereits absolvierten Ladezyklen Auskunft geben. Eine Bedienperson kann so einschätzen, wie leistungsfähig das Akkupack bzw. der elektrische Energiespeicher ist. Insbesondere in Kombination mit einer Ladezustandsanzeige, die üblicherweise anzeigt, welcher Teil einer Maximalkapazität des Energiespeichers gerade ausgenutzt wird, kann die entnehmbare Energiemenge durch einen Benutzer in verbesserter Weise abgeschätzt werden.
Die Einrichtung zur Bereitstellung der Anzahl Ladezyklen umfasst eine optische oder akustische Ausgabeeinrichtung. Die optische Ausgabeeinrichtung kann insbesondere zur Darstellung alternativ der Anzahl Ladezyklen oder des Ladezustands des Energiespeichers eingerichtet sein.
Bevorzugterweise umfasst das Akkupack einen nichtflüchtigen Informationsspeicher zur Ablage der Anzahl Ladezyklen. Die Anzahl Ladezyklen des Energiespeichers kann auf diese Weise auch dann nicht verloren gehen, wenn der Energiespeicher tiefentladen ist und keine Energie zur Aufrechterhaltung von Informationen in einem flüchtigen Energiespeicher bereitstellen kann. Die Lagerfähigkeit des Akkupacks kann auf diese Weise verbessert sein.
Ein System umfasst das oben beschriebene Akkupack und ein Ladegerät, wobei die Einrichtung zur Bereitstellung der Anzahl Ladezyklen eine Schnittstelle zum Ladegerät umfasst und das Ladegerät eine optische oder akustische Ausgabeeinrichtung zur Ausgabe einer über die Schnittstelle übermittelten Anzahl Ladezyklen umfasst.
So kann die optische oder akustische Ausgabeeinrichtung seitens des Akkupacks eingespart werden, wodurch das Akkupack mit verringerten Kosten herstellbar sein kann.

### Kurze Beschreibung der Figuren

Die Erfindung wird nun mit Bezug auf die beigefügten Figuren genauer beschrieben, in denen:
- Fig. 1 ein Akkupack;
- Fig. 2 ein System mit dem Akkupack von Fig. 1 und einem Ladegerät und
- Fig. 3 ein Verfahren zur Überwachung eines Zustands eines Akkupacks darstellt.

### Genaue Beschreibung von Ausführungsbeispielen

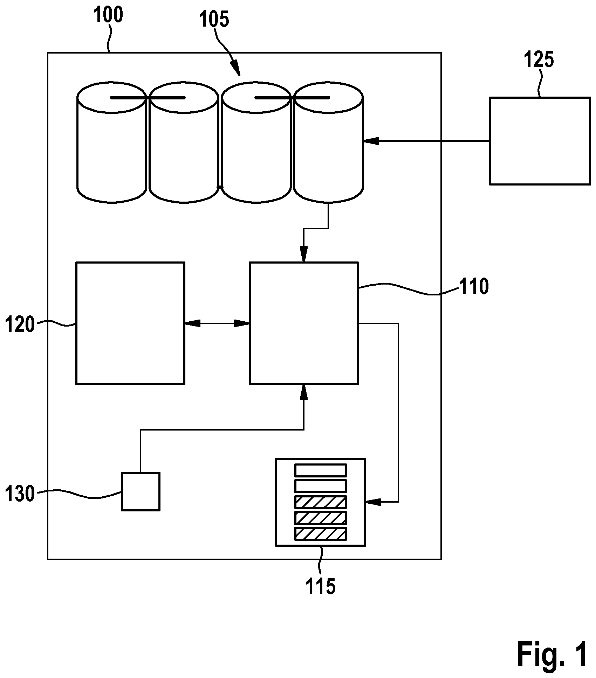

Fig. 1 zeigt ein Akkupack 100, das insbesondere zum wechselnden Betrieb an einem oder mehreren Elektrowerkzeugen eingerichtet ist. Das Akkupack 100 umfasst einen elektrischen Energiespeicher 105, eine Verarbeitungseinrichtung 110 und eine Ausgabeeinrichtung 115. Der elektrische Energiespeicher 105 umfasst üblicherweise eine oder mehrere Zellen, die beispielsweise als Lithium-Ionen- oder Nickel-Metallhydrid-Zellen aufgebaut sein können. Andere Batterietechnologien sind ebenfalls möglich. Die Verarbeitungseinrichtung 110 ist bevorzugterweise als programmierbarer Mikrocomputer ausgeführt. Üblicherweise ist die Verarbeitungseinrichtung 110 dazu eingerichtet, einen Auflade- oder Entladevorgang des Energiespeichers 105 zu steuern. Dazu kann die Verarbeitungseinrichtung 110 dazu eingerichtet sein, eine oder mehrere Zellenspannungen und eine oder mehrere Zellentemperaturen des Energiespeichers 105 abzutasten. Auch ein Strom, der in den Energiespeicher 105 oder aus dem Energiespeicher 105 fließt, kann durch die Verarbeitungseinrichtung 110 bestimmbar sein. In einer Ausführungsform ist die Verarbeitungseinrichtung 110 dazu eingerichtet, einen prozentualen Ladezustand des Energiespeichers 105 auf der Basis einer oder mehrerer Zellenspannungen zu bestimmen.

Die Ausgabeeinrichtung 115 ist dazu eingerichtet, auf akustische oder wie dargestellt optische Weise eine absolute Zahl oder einen Anteil einer Zahl an einen Benutzer auszugeben. Die Angabe kann auf grafische oder numerische Weise erfolgen. Bevorzugt ist eine digitale Ausgabe, eine analoge Ausgabe kann jedoch ebenfalls möglich sein.

Die Verarbeitungseinrichtung 110 ist zusätzlich dazu eingerichtet, die Anzahl der Ladezyklen zu bestimmen, denen der Energiespeicher 105 ausgesetzt war. Dazu kann das Akkupack 100 einen nichtflüchtigen Speicher 120 umfassen, mit dem die Verarbeitungseinrichtung 110 verbunden ist. Die Verarbeitungseinrichtung 110 überwacht einen Ladevorgang des Akkupacks 100 an einem Ladegerät 125 und stellt fest, ob ein vorbestimmtes Ladeziel erreicht wurde. Wurde das Ladeziel erreicht, so inkrementiert die Verarbeitungseinrichtung 110 die Anzahl Ladezyklen, die bevorzugterweise im nichtflüchtigen Speicher 120 abgelegt ist. Zu einem beliebigen Zeitpunkt kann die Anzahl Ladezyklen durch die Verarbeitungseinrichtung 110 auf der Ausgabeeinrichtung 115 bereitgestellt werden.

In einer Ausführungsform ist ein Bedienelement 130 vorgesehen, mit dem ein Benutzer die Ausgabe eines vorbestimmten Werts auf der Ausgabeeinrichtung 115 anfordern kann. Beispielsweise kann das Bedienelement 130 einen Taster umfassen und durch wiederholten Druck auf den Taster 130 kann die Verarbeitungseinrichtung 110 auf der Ausgabeeinrichtung 115 nacheinander verschiedene Werte ausgeben, von denen einer die Anzahl Ladezyklen des Energiespeichers 105 ist und ein anderer beispielsweise einen aktuellen Ladezustand des Energiespeichers 105 umfassen kann. Bevorzugterweise wird dabei auf der Ausgabeeinrichtung 115 noch ein Hinweis ausgegeben, welcher Wert gerade angezeigt wird.

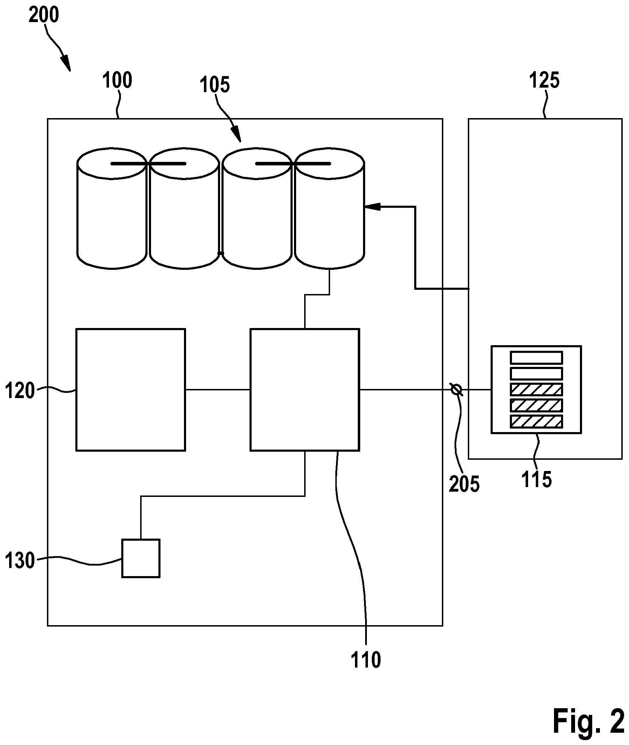

Fig. 2 zeigt ein System 200 mit einem Akkupack 100 und einem Ladegerät 125 ähnlich denen von Fig. 1. Im Unterschied zu der oben beschriebenen Ausführungsform ist die Ausgabeeinrichtung 115 jedoch nicht seitens des Akkupacks 100, sondern seitens des Ladegeräts 125 vorgesehen. Zur Kommunikation des Akkupacks 100 mit dem Ladegerät 125 ist eine Schnittstelle 205 vorgesehen. Die Verarbeitungseinrichtung 110 des Akkupacks 100 ist dazu eingerichtet, die Anzahl Ladezyklen des Energiespeichers 105 - und gegebenenfalls auch andere Werte - über die Schnittstelle 205 an das Ladegerät 125 zu übermitteln und das Ladegerät 125 ist dazu eingerichtet, den über die Schnittstelle 205 empfangenen Parameter mittels der Ausgabeeinrichtung 115 an einen Benutzer des Akkupacks 100 bzw. des Ladegeräts 125 bereitzustellen.

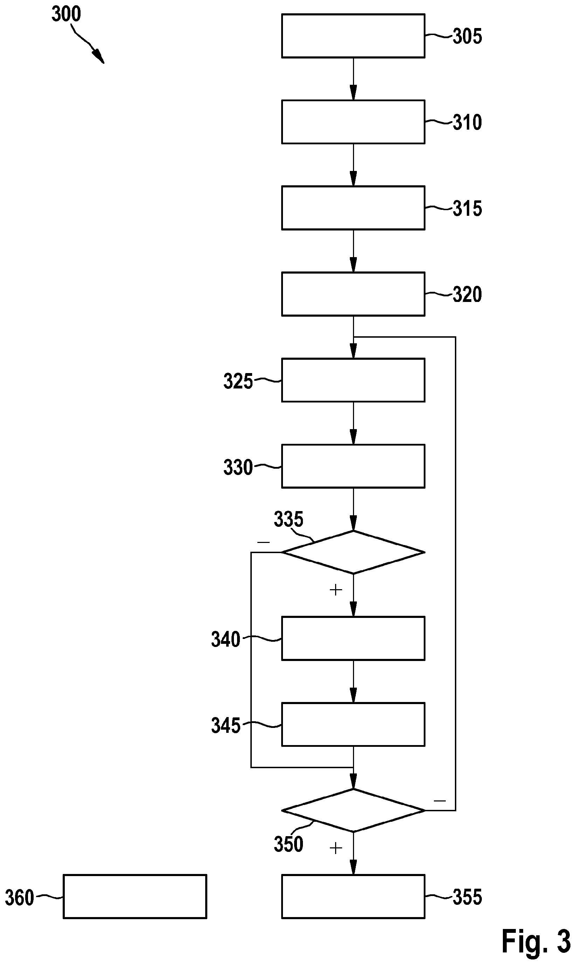

Fig. 3 zeigt ein Ablaufdiagramm eines Verfahrens 300 zur Überwachung eines Zustands eines Akkupacks, insbesondere des Akkupacks 100 einer der Figuren 1 oder 2. Das Verfahren 300 ist insbesondere zum Ablaufen auf der Verarbeitungseinrichtung 110 des Akkupacks 100 eingerichtet.

In einem Schritt 305 beginnt die Aufladung des Energiespeichers 105. Beispielsweise kann die Verarbeitungseinrichtung 110 auf der Basis eines durch den Energiespeicher 105 fließenden Stroms oder einer am Energiespeicher 105 anliegenden Spannung den Beginn eines Ladevorgangs bestimmen. in einem Schritt 310 wird optional eine bisherige Anzahl Ladezyklen bestimmt. Dazu kann ein entsprechender Zählerstand aus dem nichtflüchtigen Speicher 120 abgerufen werden.

Bevorzugterweise wird in einem Schritt 315 ein aktueller Ladezustand des Energiespeichers 105 zum Zeitpunkt des Beginns der Aufladung bestimmt. Auf der Basis des bestimmten Ladezustands wird in einem Schritt 320 ein Aufladeziel definiert. Das Aufladeziel kann auch von einem anderen Parameter als dem Ladezustand abhängig sein. In noch einer weiteren Ausführungsform kann das Aufladeziel auch fest vorbestimmt sein. Das Aufladeziel kann beispielsweise ein zusammenhängendes Aufladen des Energiespeichers 105 über eine vorbestimmte Aufladezeit betreffen. In einer anderen Ausführungsform betrifft das Aufladeziel die Erhöhung des Ladezustands des Energiespeichers 105 um einen vorbestimmten Teil seiner Gesamtkapazität. Das Aufladeziel kann auch die Erhöhung des Ladezustands um einen vorbestimmten Teil des in Schritt 305 zu Beginn des Aufladens bestimmten Ladezustands betreffen. In wieder einer weiteren Ausführungsform kann auch ein Aufladen um einen vorbestimmten Energiebetrag, der beispielsweise in Wattstunden ausgedrückt werden kann, als Aufladeziel verwendet werden.

In einem Schritt 325 erfolgt das Aufladen des Energiespeichers 105. Der Schritt 325 kann zeitlich begrenzt sein, sodass er eine vorbestimmte Dauer erfordert, die üblicherweise im Sekunden- oder Minutenbereich liegt.

In einem Schritt 330 wird ein aktueller Ladezustand des Energiespeichers 105 bestimmt. Auf der Basis des aktuellen Ladezustands wird in einem Schritt 335 überprüft, ob das Aufladeziel, das im Schritt 320 definiert wurde, erreicht ist. Ist dies der Fall, so wird die Anzahl Ladezyklen in einem Schritt 340 inkrementiert, das heißt, um 1 erhöht. Dazu wird bevorzugterweise der letzte Zählerstand aus dem nichtflüchtigen Speicher 120 geladen, verändert und wieder in den nichtflüchtigen Speicher 120 zurück geschrieben.

Um zu verhindern, dass das Erreichen des Aufladeziels wiederholt überprüft wird, kann in einem optionalen Schritt 345 das Aufladeziel auf einen unerreichbaren Wert gesetzt werden. Beispielsweise kann das Aufladeziel ein Erhöhen des Ladezustands um über 100% der Gesamtkapazität des Energiespeichers 105 gesetzt werden.

Anschließend oder wenn im Schritt 335 bestimmt wurde, dass das Aufladeziel nicht erreicht wurde, wird bevorzugterweise in einem Schritt 350 überprüft, ob die Aufladung, die im Schritt 305 begonnen wurde, beendet ist. Diese Bestimmung erfolgt üblicherweise auf der Basis von Zellenspannungen und gegebenenfalls Temperaturen am Energiespeicher 105. Ist die Aufladung beendet, so endet auch das Verfahren 300 in einem Schritt 355, wobei der Ladestrom in den Energiespeicher 105 abgestellt wird. Andernfalls, wenn die Aufladung noch nicht beendet ist, fährt das Verfahren 300 wieder mit dem Schritt 325 fort, in dem der Energiespeicher 105 weiter aufgeladen wird.

In einem Schritt 360, der von den restlichen dargestellten Schritten unabhängig ist, kann zu jedem beliebigen Zeitpunkt die aktuell bestimmte Anzahl Aufladezyklen, denen der Energiespeicher 105 ausgesetzt war, bereitgestellt werden.

## Patentansprüche

1. Verfahren (300) zur Überwachung eines Zustands eines elektrischen Energiespeichers (105) eines Akkupacks (100), wobei das Verfahren (300) folgende Schritte umfasst:
- Bestimmen (310) einer Anzahl Ladezyklen, denen der Energiespeicher (105) ausgesetzt war;
- wobei die bestimmte Anzahl der Ladezyklen inkrementiert (340) wird, wenn eine zusammenhängende Aufladung des Energiespeichers (105) zu einem vorbestimmten Aufladeziel erfasst (335) wird, und
- Bereitstellen (360) der Anzahl an einen Benutzer des Energiespeichers (105) mittels einer Einrichtung (115) des Akkupacks (100), welche eine optische oder akustische Ausgabeeinrichtung (115) umfasst.

2. Verfahren (300) nach Anspruch 1, wobei das Aufladeziel eine vorbestimmte Aufladezeit betrifft.

3. Verfahren (300) nach Anspruch 2, wobei die Aufladezeit auf der Basis eines Ladezustands des Energiespeichers (105) bestimmt wird.

4. Verfahren (300) nach einem der vorangehenden Ansprüche, wobei das Aufladeziel die Erhöhung eines Ladezustands um einen vorbestimmten Teil der Gesamtkapazität des Energiespeichers (105) betrifft.

5. Computerprogrammprodukt mit Programmcodemitteln zur Durchführung des Verfahrens (300) nach einem der vorangehenden Ansprüche, wenn das Computerprogrammprodukt auf einer Verarbeitungseinrichtung (110) abläuft oder auf einem computerlesbaren Datenträger gespeichert ist.

6. Akkupack (100), wobei das Akkupack folgendes umfasst:
- einen elektrischen Energiespeicher (105),
- eine Verarbeitungseinrichtung (110) zur Bestimmung einer Anzahl Ladezyklen, denen der Energiespeicher (105) ausgesetzt war,
- wobei die Verarbeitungseinrichtung (110) dazu eingerichtet ist, die bestimmte Anzahl der Ladezyklen zu inkrementieren, wenn eine zusammenhängende Aufladung des Energiespeichers (105) zu einem vorbestimmten Aufladeziel erfasst wird, und
- eine Einrichtung (115) zur Bereitstellung der Anzahl Ladezyklen an einen Benutzer des Energiespeichers (105), wobei die Einrichtung zur Bereitstellung der Anzahl Ladezyklen eine optische oder akustische Ausgabeeinrichtung (115) umfasst.

7. Akkupack (100) nach Anspruch 6, ferner umfassend einen nichtflüchtigen Informationsspeicher (120) zur Ablage der Anzahl Ladezyklen.

8. Akkupack (100) nach Anspruch 6 oder 7, wobei ein Bedienelement (130) vorgesehen ist, mit dem ein Benutzer die Ausgabe eines vorbestimmten Werts auf der Ausgabeeinrichtung (115) angefordert werden kann.

9. Akkupack (100) nach Anspruch 8, wobei das Bedienelement (130) einen Taster umfasst, wobei durch wiederholten Druck auf den Taster (130) die Verarbeitungseinrichtung (110) auf der Ausgabeeinrichtung (115) nacheinander verschiedene Werte ausgebbar sind

## Claims

1. Method (300) for monitoring a state of an electrical energy store (105) of a rechargeable battery pack (100), wherein the method (300) comprises the following steps:
- determining (310) a number of charging cycles to which the energy store (105) was subjected;
- wherein the determined number of charging cycles is incremented (340) when coherent charging of the energy store (105) to a predetermined charging target is detected (335), and
- providing (360) the number to a user of the energy store (105) by means of a device (115) of the rechargeable battery pack (100) which comprises an optical or acoustic output device (115).

2. Method (300) according to Claim 1, wherein the charging target relates to a predetermined charging time.

3. Method (300) according to Claim 2, wherein the charging time is determined on the basis of a state of charge of the energy store (105).

4. Method (300) according to one of the preceding claims, wherein the charging target relates to increasing a state of charge by a predetermined portion of the total capacity of the energy store (105).

5. Computer program product having program coding means for carrying out the method (300) according to one of the preceding claims when the computer program product runs on a processing device (110) or is stored on a computer-readable data carrier.

6. Rechargeable battery pack (100), wherein the rechargeable battery pack comprises the following:
- an electrical energy store (105),
- a processing device (110) for determining a number of charging cycles to which the energy store (105) was subjected,
- wherein the processing device (110) is designed to increment the determined number of charging cycles when coherent charging of the energy store (105) to a predetermined charging target is detected, and
- a device (115) for providing the number of charging cycles to a user of the energy store (105), wherein the device for providing the number of charging cycles comprises an optical or acoustic output device (115).

7. Rechargeable battery pack (100) according to Claim 6, further comprising a non-volatile information store (120) for storing the number of charging cycles.

8. Rechargeable battery pack (100) according to Claim 6 or 7, wherein an operator control element (130) is provided, with which operator control element a user can request the output of a predetermined value on the output device (115).

9. Rechargeable battery pack (100) according to Claim 8, wherein the operator control element (130) comprises a button, wherein the processing device (110) different values can be output on the output device (115) in succession by repeatedly pressing the button (130)

## Revendications

1. Procédé (300) de surveillance d'un état d'un accumulateur d'énergie électrique (105) d'un bloc de batteries (100), le procédé (300) comprenant les étapes suivantes :
- détermination (310) d'un nombre de cycles de charge auxquels a été exposé l'accumulateur d'énergie (105) ;
- le nombre déterminé de cycles de charge étant incrémenté (340) lorsqu'une charge cohérente de l'accumulateur d'énergie (105) à un objectif de charge (335) prédéfini est détectée, et
- fourniture (360) du nombre à un utilisateur de l'accumulateur d'énergie (105) au moyen d'un dispositif (115) du bloc de batteries (100), lequel comporte un dispositif de sortie (115) visuel ou sonore.

2. Procédé (300) selon la revendication 1, l'objectif de charge concernant un temps de charge prédéfini.

3. Procédé (300) selon la revendication 2, le temps de charge étant déterminé sur la base d'un état de charge de l'accumulateur d'énergie (105).

4. Procédé (300) selon l'une des revendications précédentes, l'objectif de charge concernant l'augmentation d'un état de charge d'une part prédéfinie de la capacité totale de l'accumulateur d'énergie (105).

5. Produit de programme informatique comprenant des moyens de code de programme, destiné à mettre en oeuvre le procédé (300) selon l'une des revendications précédentes lorsque le produit de programme informatique est exécuté sur un dispositif de traitement (110) ou est enregistré sur un support de données lisible par ordinateur.

6. Bloc de batteries (100), le bloc de batteries comportant les éléments suivants :
- un accumulateur d'énergie électrique (105),
- un dispositif de traitement (110) destiné à déterminer un nombre de cycles de charge auxquels a été exposé l'accumulateur d'énergie (105),
- le dispositif de traitement (110) étant conçu pour incrémenter le nombre déterminé de cycles de charge lorsqu'une charge cohérente de l'accumulateur d'énergie (105) à un objectif de charge prédéfini est détectée, et
- un dispositif (115) destiné à fournir le nombre de cycles de charge à un utilisateur de l'accumulateur d'énergie (105), le dispositif comportant un dispositif de sortie (115) visuel ou sonore pour la fourniture du nombre de cycles de charge.

7. Bloc de batteries (100) selon la revendication 6, comprenant en outre une mémoire d'informations (120) non volatile destinée au stockage du nombre de cycles de charge.

8. Bloc de batteries (100) selon la revendication 6 ou 7, un élément de commande (130) étant présent, avec lequel l'utilisateur peut demander la délivrance d'une valeur prédéfinie sur le dispositif de sortie (115).

9. Bloc de batteries (100) selon la revendication 8, l'élément de commande (130) comportant une touche, une pression répétée sur la touche (130) permettant au dispositif de traitement (110) de des valeurs différentes peuvent être délivrés successivement sur le dispositif de sortie (115)
